# EUROPEAN PATENT APPLICATION

(11) **EP 0 848 251 A2**
(43) Date of publication of application: **17.06.1998**
(21) Application number: 97309864.3
(22) Date of filing: 08.12.1997
(51) Int. Cl.: G01N 27/447

(54) **Homogeneous on-line assays using capillary electrophoresis**

(30) Priority: 16.12.1996 US 769642
(71) Applicant: BECKMAN INSTRUMENTS, INC., Fullerton California 92834-3100 (US)
(72) Inventor: Liu, Ming-Sun, Brea, California 92821 (US); Evangelista, Ramon A., Placentia, California 92870 (US); Chen, Fu-Tai A., Brea, California 92821 (US)
(74) Representative: Ede, Eric

(57) **Abstract**

A method for conducting heterogeneous specific binding assays during capillary electrophoresis with on-line detection is disclosed herein. One version of the on-line assay system introduces the slowest migrating assay reagent into a capillary column first. This first assay reagent can be either an antigen or an antibody. After a brief period of electrophoresis, a second assay reagent, which can form a specific binding complex with the first assay reagent, is introduced into the column. During a subsequent period of electrophoresis detectable specific binding complexes are formed within the capillary indicating that one of the assay reagents contains a desired analyte. In another version of the method, a third assay reagent is introduced to the capillary column. The presence of an analyte in one of the assay reagents can then be determined using a competitive binding assay. The assay is performed within the capillary where the first and second assay reagents compete for binding with a third assay reagent to form detectable complexes.

## Description

### BACKGROUND OF THE INVENTION

### Field of the Invention

The present invention relates generally to the use of capillary electrophoresis as a clinical instrument for homogenous on-line specific binding assays.

### Description of the Prior Art

Electrophoresis is, and has been, an extremely powerful tool for separating ionic species, especially biological macromolecules such as proteins and DNA. During the last 40 years, zone electrophoresis on paper, starch gel, cellulose acetate, and agarose or polyacrylamide gels have been used to separate peptides, proteins and polynucleotides. This is indeed one of the most important and fundamental tools in molecular biology and diagnostic medicine. Offsetting its versatility and utility, however, is the reality that this method is labor intensive, skill-dependent and relatively slow.

More recently, important technical advances have been achieved through the use of capillary columns. The technique of capillary columns is well suited for automation with real-time data analysis. This technique permits the use of sample quantities in the nanoliter range while buffer reagents are used in the microliter range. The results obtained by capillary electrophoresis are quite similar to those obtained in a viscous gel, in terms of buffer convection and diffusion. Analytes in the sample are similarly electrophoretically separated into discrete zones without significant diffusion.

Capillary zone electrophoresis was first developed by Mikkers et al. (J. Chromatoar. 169: 11-20 (1979)) for separation of small anions such as chloride using conductimetric detection in a Teflon capillary of 200 micrometers inner diameter. Jorgensen and Lukacs (Anal. Chem. 53: 1298-1302 (1981)) did extensive studies on capillary electrophoresis in glass and fused-silica columns for several other applications with optically based detection. Some of their earlier capillary electrophoresis studies with a mixture of dansyl amino acids showed a separation efficiency of about 250,000 theoretical plates in a voltage gradient of 300 V/cm.

Hjerten et al. (J. Chromatoar. 403: 47-61 (1987)) and Cohen and Karger ( J. Chromatoar. 397: 409-417 (1987)) introduced gel-filled capillary electrophoresis for protein and nucleic acid separation with great resolution. Terabe et al. (Anal. Chem. 57: 834-841 (1985)) expanded open-tube capillary electrophoretic separation for noncharged species, using an ionic detergent as the charged carrier, the separation principle they used is based on the partition of solutes between an aqueous phase and a micellar phase (acting as a quasi-stationary phase), similar to the chromatographic system named electrokinetic chromatography (EKC), developed by Terabe (Trends Anal. Chem. 8: 129-134 (1989)). The application of capillary electrophoresis to clinical samples, such as urine, has been demonstrated by Jorgensen and Lukacs (Clin. Chem. 27: 1551-1553 (1981)) with an open-tube capillary. Plasma sample separations have also been attempted by Jorgensen and Lukacs (Science 222: 266-272(1983)), using a coated-tube capillary.

Further, Chen et al. (Clin. Chem. 37: 14-19 (1991)) established the potential use of capillary electrophoresis for clinical diagnostic applications, with particular emphasis on using open-tube, untreated fused-silica capillary columns. In that study, Chen et al. used capillary electrophoresis to conduct routine analyses of serum proteins and hemoglobin variants, which were achieved within 10 min. without intense labor. Additionally, urine and cerebrospinal fluid (CSF) samples were analyzed without the sample reconcentration step required by other techniques. Finally, Chen et al. used the technique for multiple samples, which could be run sequentially in an automated fashion.

The specificity of binding associated with antibodies and their corresponding antigens has also been used extensively to identify clinically significant proteins. Immunoelectrophoresis, Immunofixation Electrophoresis, and Immunosubtraction Electrophoresis (IFE/s) are examples of immunological methods that are used in conjunction with an electrophoretic separation step. In particular, IFE/s has been adapted to exploit the both the speed of capillary electrophoresis and the specificity of immunological reactions involving antigens and antibodies. See for example, U.S. Patent No. 5,228,960, which is incorporated herein by reference.

IFE/s exemplifies a typical heterogeneous immunoassay, where antigen-antibody complexes are physically separated from a sample mixture. During IFE/s, a clinical sample is pre-incubated with a specific binding partner directed to a sample constituent. The specific binding partner is typically an insolubilized immunoglobulin, which can be substantially removed from the sample. A comparison of sample aliquots, which have or have not been subjected to immunosubtraction, are compared by capillary electrophoresis analysis. Binding of the insolubilized specific binding partner can result in a reduction in the level of an elevated sample constituent. Thus, immunosubtraction can establish the sample constituent's identity.

In contrast, Chen and Stemberg (Electrophoresis 15: 13-21 (1994)) demonstrated the utility of capillary electrophoresis for homogenous immunochemical reaction systems, where immunocomplexes are detected in soluble form. Moreover, Evangelista and Chen (J. Chromatogr. 680:587-591 (1994)) demonstrated the use of such a capillary electrophoresis based immunoassay to analyze the specificity of antibodies for structurally similar antigens. Even though the electrophoretic separation in these procedures are relatively quick, preparing the immunochemical reactions prior to capillary electrophoresis involves multiple steps, amenable to pipetting errors, that are not easily automated. Thus, a need exists for immunoassay procedures which lend themselves to automation using simple reproducible steps.

### SUMMARY OF THE INVENTION

The above identified needs and the shortcomings of prior art systems are overcome by the present invention which provides, in a first aspect, a method for determining at least one analyte in homogeneous on-line assays in which a first assay reagent, capable of forming a specific binding complex with a second assay reagent, is first introduced into a capillary column, which forms part of an automated capillary electrophoresis system. Then, after a prescribed period of time the second assay reagent is introduced into the column. Specific binding complexes are formed in the column, separated from their unbound precursors, and detected through a detection means. Preferably, one of either the first assay reagent or the second assay reagent is labeled and the unlabeled reagent is the analyte.

Another method of the invention involves a method for conducting on-line competitive binding assays to test for analyte utilizing automated capillary electrophoresis systems. The method involves introducing a first assay reagent into a capillary column, which forms part of the automated capillary electrophoresis system. After a prescribed period of time a second assay reagent is introduced into the capillary column and after a second prescribed period of time a third assay reagent is introduced into the capillary column. One of the first, second, or third assay reagent is an analyte which competes with another assay reagent, which is a ligand but not the analyte, for binding with yet another assay reagent, which is a specific binding partner. Thus, specific binding complexes of the first and second assay reagents, the first and third assay reagents or the second and third assay reagents are formed in the column and detected through a detection means.

In preferred embodiments of the present invention, the first, second, and third assay reagents are independently antibody or antigen. Those skilled in the art will appreciate that the reagent having the slower electrophoretic migration rate is introduced into the capillary column first. Thus, in the above first defined method the first assay reagent has the slower electrophoretic migration rate and can be an antibody or antigen. The second assay reagent has a faster electrophoretic migration rate and is an antibody when the first assay reagent is an antigen and vice versa.

In the second above defined method the first assay reagent has the slowest migration rate and the third assay reagent has the fastest migration rate. In the case in which the first assay reagent is a labeled antigen and the second assay reagent is an antigen analyte, then the first and second assay reagents have similar migration rates, the only difference between the two being that the first reagent is labeled. In this case the competing reaction between the first and second assay reagents for binding with the third assay reagent. On the other hand, when the first assay reagent is an antibody and the analyte is antigen, then the competing reaction is between the second and third assay reagents for binding with the first assay reagent.

Advantageously, the present invention lends itself to unattended automated clinical and diagnostic sample processing. This is because the specific binding partner and ligand are each placed in individual vials and either may be used repeatedly to do multiple sample analysis. Also, reproducible programmed amounts of antibody and antigen can be repeatedly injected into electrophoresis columns, thereby precluding the need to perform manual pipetting characteristic of prior art methods. The methods of the present invention additionally are significantly less costly than prior art methods because each assay requires only a few nanoliters of assay reagent solutions thereby reducing reagent expense.

The foregoing and additional features and advantages of this invention will become apparent from the detailed description and accompanying drawing figures that follow.

### BRIEF DESCRIPTION OF THE DRAWINGS

FIG. 1 is a flow chart illustrating an on-line immunoassay in accordance with one embodiment of the method of the invention;
FIG. 2 is a flow chart illustrating an on-line immunoassay in accordance with another embodiment of the method of the invention;
FIG. 3 is an electropherogram of a Cy5-labeled Digoxin immunoassay conducted in accordance with one embodiment of the method of the invention; and
FIG. 4 is an electropherogram of a Cy5-labeled TSH immunoassay conducted in accordance with one embodiment of the method of the invention.

### DETAILED DESCRIPTION OF THE PREFERRED EMBODIMENT(S)

In accordance with the present invention, a method is provided for a homogeneous on-line assay which employs a capillary electrophoresis system in concert with a detectably labeled ligand or specific binding partner. The formation of a specific binding complex comprised of an analyte or ligand and the specific binding partner permits detection and/or quantitation of minute concentrations of an analyte.

Any of a wide variety of analytes may be evaluated in accordance with the methods of the present invention. Suitable analytes can include any ligand, e.g., antigen, hapten, substrate, vitamin, or hormone which can form a complex with a specific binding partner. Thus, virtually any protein or any other analyte that can act as a hapten in an immunochemical reaction can be analyzed as described herein. In preferred embodiments of the present invention, the analytes are pharmaceutical compounds, such as therapeutic drugs including theophylline and digoxigenin. Importantly, drugs of abuse and their metabolites, such as cocaine, cannabinoids, opiates, PCP, amphetamines, and other toxins are amenable to analysis according to the present invention. Samples containing the analytes are preferably clinical samples such as blood, serum, urine, feces, saliva, and cerebrospinal fluid (CSF). However, samples can also originate from other sources such as foodstuffs, water, soil, or air.

A specific binding partner is a macromolecule that has a specific binding affinity for an analyte or ligand to the exclusion of other substances. Ligands are generally analytes or their analogs, which are capable of competitive binding with the specific binding partner. Specific binding partners are preferably antibodies or antibody fragments, but may include other macromolecules such as lectins, receptors, and enzymes. In the case where one of the assay reagents is an antibody, it is preferred that the antibodies used are monoclonal antibodies, preferably with affinity constants of 10⁻⁹ or more. However, polyclonal antibodies, Fab or F(ab)2) fragments, or single chain antibodies may be employed.

In accordance with the present invention capillary electrophoresis (CE) is used to mediate the separation of the analytes, ligands, and specific binding partners from specific binding complexes. In general, CE involves introduction of assay constituents into a capillary tube, i.e., a tube having an intemal diameter of from about 2 to 2,000 microns (mm) and the application of an electric field to the tube. The electric potential of the field both pulls the assay constituents through the tube and separates them according to their individual electrophoretic mobilities.

The CE format of the present invention is preferably "open" CE, wherein the capillary tube is filled with an electrically conductive buffer solution devoid of a sieving polymer or gel. The capillary is preferably fused silica, which becomes negatively charged at a pH greater than about 1.5. Upon ionization of the capillary, the negatively charged capillary wall will attract a layer of positive ions from the buffer. As these ions flow towards the cathode, under the influence of the electrical potential, the buffer solution and the sample being analyzed are carried along in the same direction. This electroendoosmotic flow provides a fixed velocity component, which drives both neutral species and ionic species, regardless of charge towards the cathode. Thus, the migration rate of the assay reagents and complexes depends on a combination of their electrophoretic mobilities and the underlying electroendoosmotic flow.

Open CE has many desirable qualities for clinical sample analysis. For example, because the analysis does not involve a gel-filled column, numerous analytical runs can be conducted without concern for the "breakdown" of a gel matrix Moreover, the buffer in open CE is as stable against conduction and diffusion as the gels utilized in gel CE. Sample analysis time is fast, i.e. less than about 20 minutes, and the protocol lends itself to automation, thus decreasing the labor skills necessary for efficient and effective sample analysis.

In addition, the methods of the present invention provide for free and bound assay reagents to be detected and measured in the presence of numerous potentially interfering substances. This is accomplished by the use of a uniquely detectable label on a selected assay reagent. A variety of labels, including but not limited to light absorbing and radiation emitting moieties, can be incorporated into the desired assay reagent. Preferably, a fluorophore is used as the label, which provides a high detection sensitivity and thus much lower limits of detectability. Suitable labels for use in conjunction with the present invention include fluorescing compounds, such as fluorescein, isothiocyanate, rhodamine, phycoerythrin, phycocyanin, allophycocyanin, O-phthaldehyde labels, fluorescamine, tetramethylrhodamine, and "BODIPY." Particularly suitable labels are cyanine dyes, such as the dicarbocyanine (Cy5) and tricarbocyanine (Cy7) families of dyes. Cyanine dyes are attractive for use in laser induced fluorescent applications because their excitation and emission wavelengths are compatible with commercially available and less costly lasers.

A first embodiment of the present invention provides a method for determining the presence or absence of at least one analyte using a heterogeneous on-line assay. A first assay reagent, capable of forming a specific binding complex with a second assay reagent, is introduced into a capillary column, which is a component of an automated capillary electrophoresis system. The first assay reagent is a member of a specific binding complex, i.e. either an analyte or a specific binding partner, which has a relatively slower rate of migration during capillary electrophoresis. The first assay reagent is subjected to capillary electrophoresis for a prescribed period of time. The second assay reagent is then introduced into the column and subjected to capillary electrophoresis. The second assay reagent is the faster migrating member of a specific binding complex. When the faster migrating second assay reagent meets the slower first assay reagent within the capillary, specific binding complexes are formed and detected through a detection means. Preferably, one of either the first assay reagent or the second assay reagent is labeled and the unlabeled reagent is the analyte. During the detection step, labeled assay reagent can be resolved from the labeled specific binding complex due to differences in their respective migration rates. Formation of detectable specific binding complexes indicates the presence of unlabeled analyte.

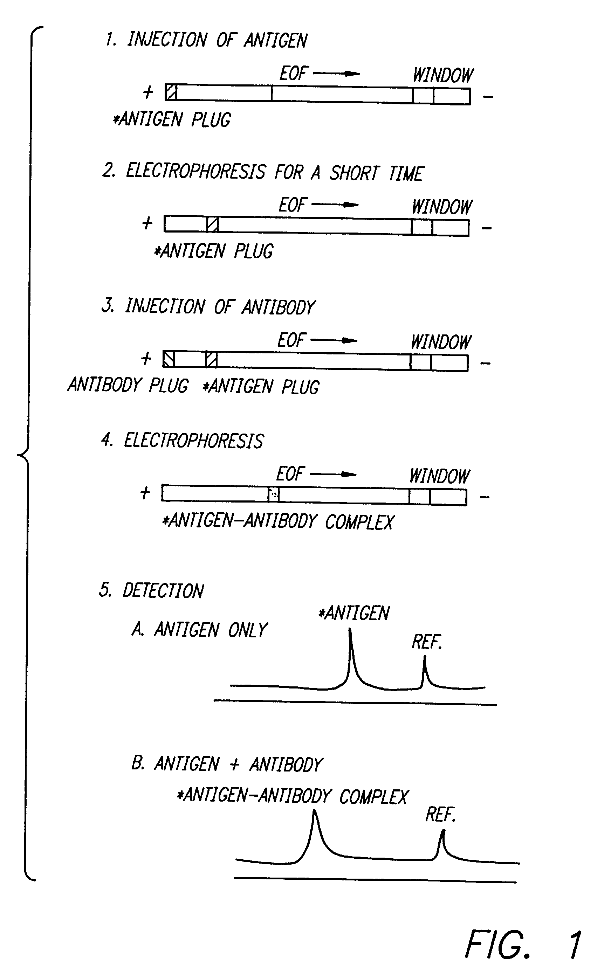

An example of the above method of the present invention is outlined in Fig. 1 wherein the various steps of the method are described. In the example the first assay reagent is an antigen and the second assay reagent is an antibody. It is understood that altemative embodiments are contemplated in the present invention wherein the first assay reagent is the antibody and the second assay reagent is the antigen. One of the assay reagents must first be labeled in order to assist in the detection. In the instant embodiment the antigen is labeled and the assay tests for an unlabeled antibody analyte. However, in the alternative the antibody may be labeled to test for an unlabeled antigen analyte.

In the first step of the method, the first assay reagent, which in this particular embodiment is a labeled antigen, is introduced into a capillary at a concentration ranging from about 10⁻¹² M to about 10⁻³M, preferably about 10⁻⁸M. In the second step of the method the labeled first assay reagent is then subjected to electrophoresis in a capillary column previously filled with buffer. Preferably the buffer solution will not contain a sieving polymer. The antigen is allowed to migrate for a period of time ranging from about 1 to about 99 sec., most preferably about 10 sec. In the third step of the method, the second assay reagent, in this particular embodiment an antibody having a concentration of from about 10⁻¹²M to about 10⁻³M, most preferably about 10⁻⁸M, is then introduced into the capillary. In the fourth step of the method the second assay reagent then reacts with the previously injected first assay reagent to form specific binding complexes. In the fifth step of the method, the labeled entities, i.e., the labeled first assay reagent and the labeled first assay reagent-antibody complex, are separated by capillary electrophoresis, and detected using the techniques outlined below.

In another version of the invention a method is provided for conducting on-line competitive binding assays utilizing automated capillary electrophoresis systems. The method involves introducing a first assay reagent into a capillary column, which forms part of the automated capillary electrophoresis system. After a prescribed period of time, a second assay reagent is introduced into the capillary column and, after a second prescribed period of time, a third assay reagent is introduced into the capillary column. One of the first, second, or third assay reagent is an analyte which competes with another assay reagent, which is a ligand but is not an analyte, for binding with yet another assay reagent, which is a specific binding partner. Thus, specific binding complexes of the first and second assay reagents, the first and third assay reagents or the second and third assay reagents are formed in the column and detected through a detection means.

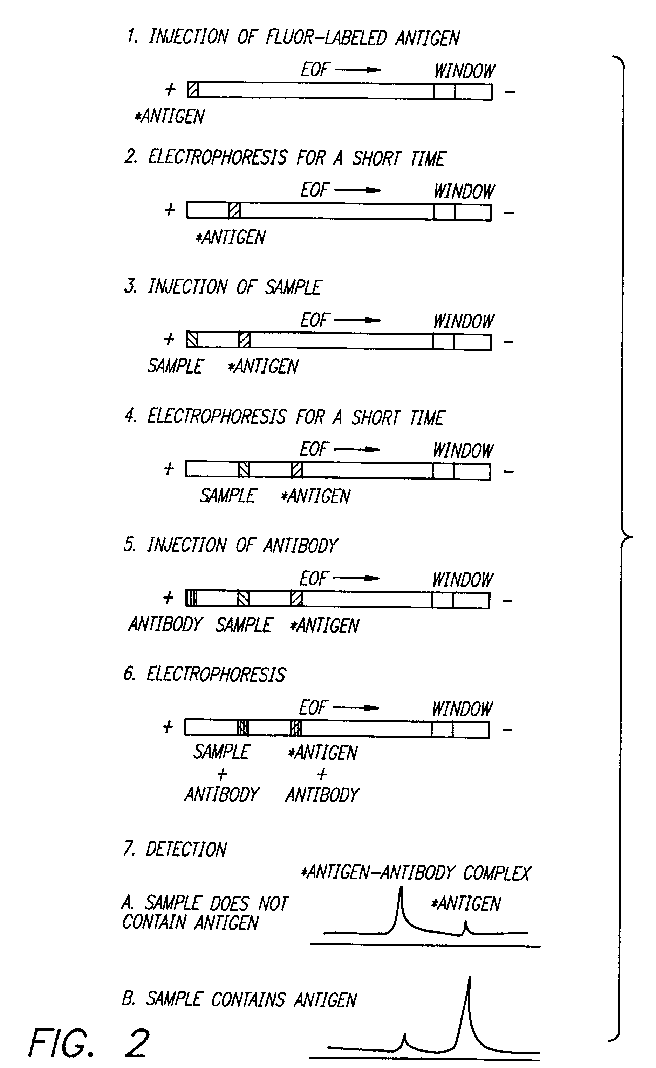

A particular embodiment of this method is outlined in Fig. 2, wherein the various steps of the method are described. This method utilizes a labeled first assay reagent, in this case a labeled antigen. In the first step of the method, the labeled first assay reagent is introduced into a capillary column. When, as here, the first assay reagent is an antigen, then it is used at a concentration ranging from about 10⁻¹²M to about 10⁻³M, preferably about 10⁻⁸M. In the second step of the method, the labeled first assay reagent is then subjected to electrophoresis in a capillary column previously filled with buffer. The first assay reagent is allowed to flow for a first period of time ranging from about 1 to about 99 sec., most preferably about 10 sec. In the third step of the method, a second assay reagent, in this case referenced as the sample, having an analyte concentration of from about 10⁻¹²M to about 10⁻³M most preferably about 10⁻⁸M, is then introduced into the capillary. In the fourth step, the labeled first assay reagent is then subjected to electrophoresis in the capillary column. In the fifth step, the third assay reagent, in this case an antibody having a concentration of from about to about 10⁻⁸M to about 10⁻³M, most preferably about 10⁻⁸M, is then introduced into the capillary. In the sixth step of the method, the third assay reagent then reacts with the previously injected first and second assay reagent to form specific binding complexes. In the seventh step of the method, the labeled entities, i.e., the labeled first assay reagent and the labeled first assay reagent-antibody complex, are separated detected using the techniques outlined above.

It is understood that in alternative embodiments labeled antibody would be used instead of the labeled antigen, e.g., in a test for an unlabeled antibody analyte. Further, the first assay reagent may be any one of the antigen, antibody or sample. In those cases the second and third assay reagents will each in tum be one of the remaining reagents.

A Beckman P/ACE System 2100 capillary electrophoresis system (Beckman Instruments, Inc., Fullerton, CA) with Beckman system software, controlled by an IBM PS/2 model Z-50 may be used in the practice of the present invention. Data analysis may be performed with System Gold (tm) software (Beckman Instruments, Inc., Fullerton, CA). Other capillary electrophoresis systems may be used. At present other capillary electrophoresis systems are only available with absorbance detectors which can be used if absorbance is the preferred detection method.

Detection may be performed by use of a Beckman LIF detector module with a Red helium-neon laser using a 633/665 filter or any other laser source. Additionally, other detection systems may be used but may suffer in regard to sensitivity. Electrophoresis is performed in a capillary. The capillary which may be used in the practice of the invention may be coated or uncoated. The capillary tubes which are preferred in the practice of the invention have an intemal diameter which ranges in size from about 10 to about 200 micrometers. Most preferably, capillary tubes with an intemal diameter of about 20 micrometers are used in the practice of the invention. The capillary tubes which are preferred in the practice of the invention have a length ranging from about 10 to about 100 cm, most preferably, about 27 cm. A detection window is located in the capillary tube approximately 6.5 cm from the column outlet, and permits detection of the test material.

The capillary column which consists of the capillary tube and the detection window are preferably maintained at a temperature of from about 10 to about 50 degrees centigrade, most preferably at a temperature of 50 degrees centigrade. The temperature can be maintained by, for example, having circulating coolant surrounding the capillary column.

The sample may be introduced by electrokinetic injection, hydrodynamic pressure, vacuum or syringe pump. Samples are preferably introduced into the capillary column by pressure injection ranging from about 0.5 to about 15 psi, most preferably about 0.5 psi, and during a period from about from about 1 to about 99 sec, most preferably about 10 sec. The sample is subjected to electrophoresis at a voltage preferably ranging from about 1000 to about 100,000 volts, most preferably about 20,000 volts.

It is preferable to periodically conduct a wash and reconditioning step for the capillary column. The wash step is preferably conducted using in NaOH with a subsequent rinsing using H₂O. The column is then reconditioned with buffer.

A running buffer is employed in the practice of the invention. Preferably, the buffer is a biocompatible, neutral buffer such as PBS, TRIS, TRIS-acetate, MOPS, HEPES, TRIS-borate, glycine tricine and most preferably PBS buffer. However, the pH of the buffer may be adjusted to improve the resolution of assay constituents within a range from about 6 to about 10. The preferred running buffer is borate buffer, wherein the concentration of the borate ranges from about 20 to about 500 mM, most preferably about 80, and has a pH ranging from about 8 to about 11, most preferably about 10.2. The buffer system is preferably filtered before use, most preferably through a 0.45 micrometer filter.

At least one intemal marker may be employed in the practice of the invention to allow for normalization with respect to time. Preferably the marker migrates ahead of the assay constituents providing a time zero starting point for comparing the relative migration times of the assay constituents. For assays that are monitored by UV absorbance, an electroendosmotic flow marker, which is a neutral species, can be selected from the group belonging to N,Ndimethylformamide, benzyl alcohol and the like, most preferably dimethylformamide (DMF). In the case of DMF a concentration ranging from about 0.001 to about 0.1% v/v, most preferably about 0.002% v/v is added to the sample diluent. For assays that detect fluorescence-labeled assay constituents, a fluorescent compound, which has not been incorporated into a labeled assay reagent, e.g., Cy5, can be utilized.

It is understood by those of ordinary skill in the art that the present invention lends itself to unattended automated clinical and diagnostic sample processing. This is because specific binding partner and ligand are each placed in individual vials and either may be used repeatedly to do multiple sample analysis. Also, reproducible programmed amounts of specific binding partner and ligand can be repeatedly injected into electrophoresis columns, thereby precluding the need to perform manual pipetting characteristic of prior art methods. The methods of the present invention additionally are significantly less costly than prior art methods because each assay requires only a few nanoliters of the assay reagent solutions thereby reducing reagent expense.

The method of the present invention may be better understood by reference to the following examples.

### EXAMPLE 1

A fused silica capillary column having an intemal diameter of 20 mm and an overall length of 27 cm, including the detection window was utilized in this example. An 80 mM borate buffer at pH 10.2 was used as the diluent buffer. Cy5 was used as the label which was prepared according to the following protocol. 3-Amino-3-deoxydigoxigenin (Molecular Probes, Eugene OR) in DMSO (5 mL of 0.013 M solution) was added to a freshly prepared solution of Cy5 reactive dye (Amersham BDS, Pittsburgh, PA) (80 nanomole) in 50 mL 50 mM phosphate pH 7.5. The mixture was shaken on a vortex mixer and then the labeling reaction was allowed to proceed in the dark at room temperature for 3 hours, The product was purified by reversed-phase HPLC through a Poros column (PerSeptive Biosystems, Cambridge MA) using a linear gradient of methanol (Solvent B) and 10 mM phosphate pH 8 (solvent A) as eluent at 1.5 ml/min flow rate with absorbance monitoring at 598 nm. The gradient consisted of 40%B for 1 minute, 40% to 65% B in 8 minutes and 65% to 100%B in 1 minute. The fraction which eluted at 4 minutes was identified as the product by its immunochemical reaction with sheep polyclonal anti-digoxigen Fab with monitoring by CE/LIF. The product was rechromatographed and then the concentration of the purified labeled antigen was determined from its absorbance at 650 nm (e= 215,000 M-1 cm-1 ).

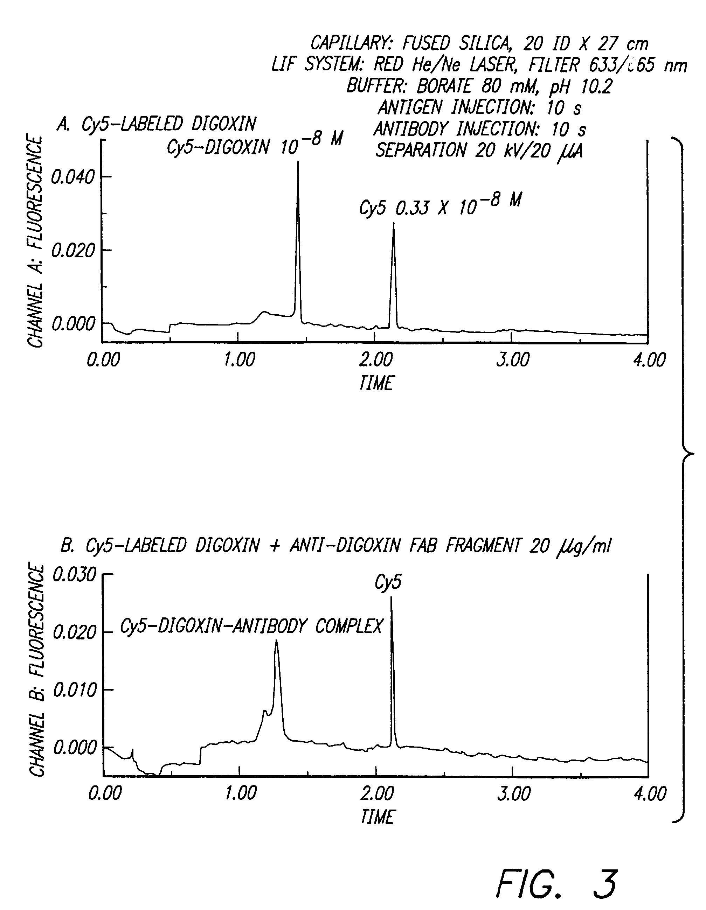

With reference to Fig. 3, Cy5 at a concentration of 0.33 x 10⁻⁸ was introduced into the column as the reference. In panel A, Cy5 -labeled Digoxin at a concentration of 10⁻⁸M was then introduced into the column over a period of 10 sec. Panel A shows the resulting electropherogram illustrating the relative migration pattems of the two species and serves as the control for the experiment. In panel B, the same protocol was employed except that after the Cy5-labeled Digoxin was introduced into the column an anti-Digoxin Fab fragment at a concentration of 20 mg/ml was introduced into the column over a period of 10 sec. Panel B shows the resultant electropherogram in which the Cy5-Digoxin has formed an immunocomplex with the anti-Digoxin Fab fragment thereby shifting the migration pattern.

### EXAMPLE 2

A fused silica capillary column having an intemal diameter of 20 mm and an overall length of 27 cm, including the detection window was utilized in this example. An 80 mM borate buffer at pH 10.2 was used as the diluent buffer. Cy5 was used as the label as discussed in Example 1.

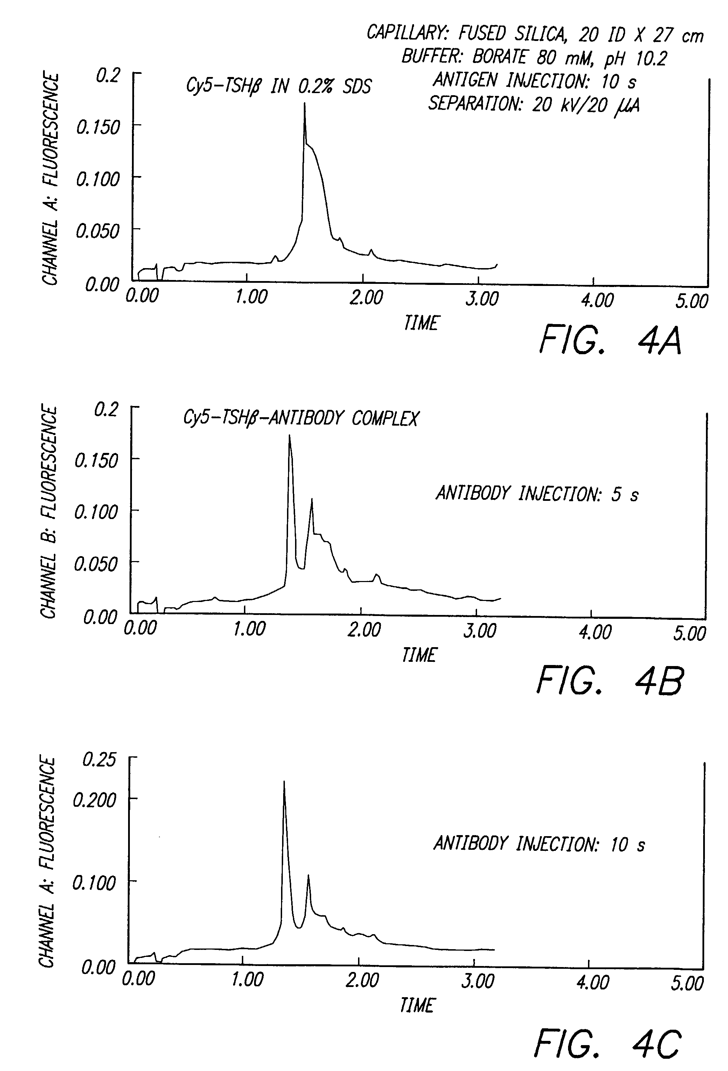

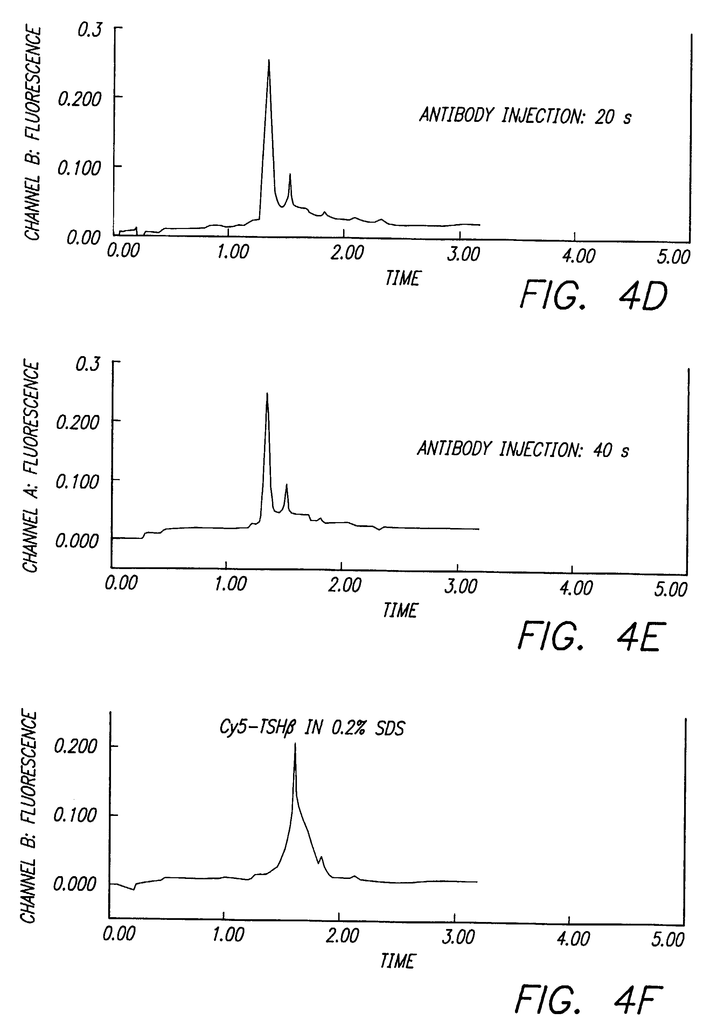

Figure 4 represents a series of electropherograms which form part of this example. In panel A, Cy5-labeled TSHb subunit was run through the system as described previously and the resultant migration pattem is illustrated. Panels B-E show that antibody against the subunit was introduced in increasing amounts, by varying the length of time of the injection of antibody. Panels B-E show that as more antibody is injected into the capillary column more immunocomplex is formed. Panel F is a control panel showing that no antibody contamination was found in the antigen solution after on-line immunoreactions were carried out.

It will be appreciated by persons skilled in the art that the present invention is not limited to what has been shown and described hereinabove, nor the dimensions of sizes of the physical implementation described immediately above.

## Claims

1. A method for conducting on-line assays in a capillary electrophoresis system comprising the steps of:
a) introducing a first assay reagent into a capillary column which forms part of a capillary electrophoresis system;
b) subjecting said first assay reagent to capillary electrophoresis for a first period of time;
c) introducing a second assay reagent into said capillary containing said first assay reagent;
d) subjecting said second assay reagent to capillary electrophoresis for a second period of time;
e) allowing said first and second assay reagents to form specific binding complexes while subjected to said capillary electrophoresis, wherein one of said first and second assay reagents is an analyte; and
f) assaying for the analyte by detecting said specific binding complexes

2. The method of claim 1, wherein said first assay reagent is an antigen.

3. The method of claim 2, wherein said antigen is a labeled antigen.

4. The method of claim 3, wherein said labeled antigen is labeled with Cy5.

5. The method of claim 4 wherein said detection is accomplished by means of a laser source.

6. The method of claim 1, wherein said second assay reagent is an antibody.

7. The method of claim 6, wherein said antibody is selected from the group consisting of polyclonal antibodies, monoclonal antibodies; Fab fragments, F(ab)₂ fragments and single-chain immunoglobulins.

8. The method of claim 6, wherein said antibody is a labeled antibody.

9. The method of claim 8, wherein said labeled antigen is labeled with Cy5.

10. The method of claim 9 wherein said detection is accomplished by means of a laser source.

11. A method for conducting on-line competitive binding assays in a capillary electrophoresis system comprising the steps of:
a) introducing a first assay reagent into a capillary column which forms part of a capillary electrophoresis system;
b) subjecting said first assay reagent to capillary electrophoresis for a first period of time;
c) introducing a second assay reagent into said capillary column;
d) subjecting said second assay reagent to capillary electrophoresis for a second period of time;
e) introducing a third assay reagent into said capillary;
f) subjecting said third assay reagent to capillary electrophoresis for a third period of time;
g) allowing said third assay reagent to competitively form specific binding complexes with said first assay reagent and said second assay reagent, wherein one of said first and second assay reagents is an analyte; and
h) assaying for said analyte by detecting said specific binding complexes.

12. The method of claim 1 1, wherein said third assay reagent is an antibody.

13. The method of claim 12, wherein said antibody is selected from the group consisting of polyclonal antibodies, monoclonal antibodies; Fab fragments, F(ab)₂ fragments and single-chain immunoglobulins.

14. The method of claim 11, wherein said first assay reagent is an antigen.

15. The method of claim 12, wherein said antigen is a labeled antigen.

16. The method of claim 13, wherein said labeled antigen is labeled with Cy5.

17. The method of claim 14 wherein said detection is accomplished by means of a laser source.
